# EUROPÄISCHE PATENTSCHRIFT

(11) **EP 0 925 143 B1**
(45) Veröffentlichungstag und Bekanntmachung des Hinweises auf die Patenterteilung: **05.12.2001**
(21) Anmeldenummer: 97941986.8
(22) Anmeldetag: 06.09.1997
(51) Int. Cl.: B23K 35/363, B23K 103/10

(54) **LOTFREIES ALUMINIUMLÖTEN**
SOLDERLESS BRAZING OF ALUMINIUM
BRASAGE D'ALUMINIUM SANS METAL D'APPORT

(30) Priorität: 11.09.1996 DE 19636897
(43) Veröffentlichungstag der Anmeldung: 30.06.1999
(73) Patentinhaber: Solvay Fluor und Derivate GmbH, 30173 Hannover (DE)
(72) Erfinder: BORN, Thomas, D-31188 Holle (DE); BELT, Heinz-Joachim, D-30938 Burgwedel (DE)
(74) Vertreter: Lauer, Dieter, Dr.
(86) Internationale Anmeldenummer: EP9704851
(87) Internationale Veröffentlichungsnummer: WO9810887

(56) Entgegenhaltungen:
- EP-A- 0 810 057
- DE-A- 19 519 515
- US-A- 4 906 307
- PATENT ABSTRACTS OF JAPAN vol. 011, no. 039 (M-559), 5.Februar 1987 & JP 61 206593 A (MITSUBISHI ALUM CO LTD), 12.September 1986,
- CHEMICAL ABSTRACTS, vol. 109, no. 26, 26.Dezember 1988 Columbus, Ohio, US; abstract no. 235547, CHEN, GENBAO ET AL: "Fluoride flux for aluminum-silicon alloy braze" XP002051525 & CN 87 101 020 A (SHANGHAI WELDING TECHNIQUE INSTITUTE, PEOP. REP. CHINA)
- CHEMICAL ABSTRACTS, vol. 126, no. 3, 20.Januar 1997 Columbus, Ohio, US; abstract no. 35476, KAWAKATSU, ICHIRO: "Brazing of aluminum by low-cost process without using brazing sheets" XP002051526 & JP 08 267 229 A (KAWAKATSU ICHIRO, JAPAN)

## Beschreibung

Die Erfindung bezieht sich auf ein Verfahren zum lotfreien Aluminiumlöten und ein hierfür geeignetes Flußmittel.

Beim Löten werden metallische Werkstücke mit Hilfe eines geschmolzenen Lotes verbunden. Flußmittel werden beim Löten eingesetzt, um für eine saubere Oberfläche und damit für eine feste Verbindung der Werkstoffe zu sorgen. Es wurden bereits Flußmittel entwickelt, die diese Aufgabe im Hinblick auf das Aluminiumlöten sehr gut lösen. Als besonders gut geeignet haben sich Flußmittel auf Basis von Kaliumfluoraluminaten erwiesen. Die Herstellung von Kaliumfluoraluminaten bzw. ihre Verwendung als Flußmittel wird beispielsweise in den US-Patenten 3,951,328; 4,428,920; 4,579,605; 5,318;764; in der deutschen Offenlegungsschrift DE 195 19 515 A1; der deutschen Patentanmeldung ... (195 20 812) und der deutschen Patentanmeldung ... (195 37 216) beschrieben. Das US-Patent 4,906,307 offenbart Flußmittel zum Löten von Legierungen auf Aluminium-Basis, wobei das Flußmittel 70 bis 90 Gew.-% K₂SiF₆ und 30 bis 10 Gew.-% AlF₃ enthält. Dieses Flußmittel kann gewünschtenfalls mit weiteren Zusätzen wie Lithiumfluorid oder Natriumfluorid eingesetzt werden. Auch kann ein Dispergiermittel verwendet werden.
Die gemäß dem Stand der Technik bekannten Aluminiumlötverfahren werden stets so durchgeführt, daß neben dem Flußmittel auch ein Lotmetall auf die zu verbindenden Metallbauteile aufgebracht werden muß. Gemäß der Lehre der US-Patente 5,100,048 und 5,190,596 kann dies auch so erfolgen, daß man ein Metall wie Silicium, Kupfer oder Germanium dem Flußmittel beimischt. Gemäß anderer Verfahren kann man so vorgehen, daß man Aluminiumbauteile einsetzt, die mit dem Lotmetall plattiert sind.

Die EP-A 0 810 057 ist eine ältere Anmeldung für die Vertragsstaaten BE, DE, FR, GB und IT. Sie offenbart ein Flußmittel aus 80 - 99,9 % Fluoraluminat-Komplex und 0,1 bis 20 % Metallfluorsilikat. Bevorzugt besteht der Fluoraluminat-komplex aus KAlF₄ oder einem Gemisch aus KAlF₄/K₃AlF₆. Als brauchbares Metallfluorsilikat wird K₂SiF₆ genannt. Wenn der Prozentgehalt des Fluorsilikats im bevorzugten Bereich von 7 bis 15 % liegt, ist ein Löten ohne Lotmetall möglich.

Nachteil bei den bekannten Verfahren ist, daß sie stets einen Arbeitsschritt umfassen, der das Aufbringen oder Einmischen des Lotmetalls oder anderer Metalle wie Silicium, Kupfer oder Germanium vorsieht. Aufgabe der vorliegenden Erfindung ist es, ein Verfahren zum Aluminiumlöten anzugeben, welches das Verlöten gestattet, ohne daß ein Lotmetall benötigt wird. Die Lösung dieser Aufgabe erfolgt gemäß den kennzeichen der Patentansprüche 1 bis 8.

Das erfindungsgemäße Verfahren zum Aluminiumlöten unter Verwendung eines Kaliumfluoraluminat enthaltenden Flußmittels sieht vor, daß man ohne Zusatz eines Lotes arbeitet und ein Flußmittel verwendet, welches 6 bis 50 Gew.-% K₂SiF₆ und 50 bis 94 Gew.-% Kaliumfluoraluminat enthält oder daraus besteht. Sind weniger als 6 Gew.-% des Fluorsilikats enthalten, läßt die Qualität der Lötverbindung nach. Bevorzugt sind 7 bis 30 Gew.-% K₂SiF₆ im Flußmittel enthalten. Das Kaliumfluoraluminat ist dann in einer Menge von 93 bis 70 Gew.-% im Flußmittel enthalten. Insbesondere sind 7 bis weniger als 30 Gew.-% K₂SiF₆ und 93 bis mehr als 70 Gew.-% Kaliumfluoraluminat enthalten. Der Begriff "Kaliumfluoraluminat" umfaßt die bekannten komplexen Aluminiumfluoride des Kaliums, welche aus Kalium, Aluminium, Fluor und gegebenenfalls Wasser zusammengesetzt sind. Bevorzugte Flußmittel im Sinne der Erfindung enthalten als Kaliumfluoraluminat KAlF₄ und K₂AlF₅ und/oder K₂AlF₅ · H₂O. K₃AlF₆ ist nicht oder in geringen Mengen, beispielsweise bis hin zu 5 Gew.-%, im Flußmittel enthalten. Dabei kann das Pentafluoraluminat auch in Form von irreversibel dehydratisiertem Produkt vorliegen, dessen Herstellung durch Erhitzen des hydratisierten Materials auf Temperaturen oberhalb von ca. 260 °C in der deutschen Offenlegungsschrift DE 195 19 515 A1 beschrieben erfolgt.

Man kann das Flußmittel als solches, gegebenenfalls unter Mitverwendung üblicher Hilfsstoffe einsetzen. Beispielsweise kann man als Hilfsstoff ein Bindemittel vorsehen, welches das Haften des Flußmittels auf der Oberfläche der zu verbindenden Aluminiumbauteile bewirkt.

Zweckmäßig verwendet man das Flußmittel in Form einer Flußmittelzubereitung, welche das Flußmittel als Aufschlämmung oder Paste in Wasser, einer organischen Flüssigkeit oder einem Gemisch von Wasser und organischer Flüssigkeit enthält. Als "organische Flüssigkeit" verwendet man zweckmäßig die üblicherweise als organische Lösungsmittel verwendeten Substanzen wie Alkohole, insbesondere Methanol, Ethanol, Propanol oder Isopropanol. Zur Herstellung der Zubereitung kann man K₂SiF₆ und Kaliumfluoraluminat einzeln oder als Gemisch mit der flüssigen Phase vermischen.

Der Gehalt an Wasser bzw. der organischen Flüssigkeit wird so eingestellt, daß die gewünschte Konsistenz bezüglich der Aufschlämmung bzw. der Paste erreicht wird. Die Aufschlämmung bzw. Paste enthält vorteilhaft 3 bis 70 Gew.-% des Flußmittels, Rest auf Hundert Gew.-% sind Wasser bzw. die organische Flüssigkeit, etwaige Verunreinigungen und etwaige weitere Hilfsstoffe wie Dispergiermittel.

Das erfindungsgemäße Verfahren kann für Bauteile aus Aluminium oder Aluminiumlegierungen eingesetzt werden. Allerdings sollte der Magnesiumgehalt in Legierungen unterhalb 0,5 Gew.-% liegen. Das Löten kann in üblicher Weise, beispielsweise in einem Ofen oder mittels Brenner durchgeführt werden. Die geeignete Löttemperatur kann gegebenenfalls durch Handversuche ermittelt werden. Optimal kann Aluminium im Temperaturbereich von 580 °C bis 605 °C verlötet werden.

Das Beschichten der zu verlötenden Komponenten kann auf herkömmliche Weise erfolgen, beispielsweise durch Eintauchen, Besprühen, Berieseln, Bedrucken oder Bestreichen.

Das erfindungsgemäße Verfahren eignet sich allgemein zur lötenden Verbindung von Bauteilen aus Aluminium oder Aluminiumlegierung ohne Lotzusatz. Insbesondere eignet es sich zum Löten von Kühlern und Wärmetauschern, beispielsweise für die Autoindustrie, sowie in der Elektronikindustrie zum Verlöten von Leitern aller Art und Größe. Man kann beispielsweise auch dünne Folien verlöten.

Ein weiterer Gegenstand der Erfindung ist ein lotfreies Flußmittel. Es zeichnet sich dadurch aus, daß es 6 bis 50 Gew.-% K₂SiF₆ und 50 bis 94 Gew.-% Kaliumfluoraluminat enthält oder aus diesen beiden Substanzen besteht. Bevorzugte Mengen dieser beiden Substanzen und bevorzugt einzusetzende Kaliumfluoraluminate sind weiter oben beschrieben. Gewünschtenfalls können übliche Hilfsstoffe wie Bindemittel mit im Flußmittel enthalten sein. Das erfindungsgemäße lotfreie Flußmittel kann auch in Form eines Kits vorliegen, wobei die Substanzen voneinander getrennt vorliegen und zur gemeinsamen Anwendung im erfindungsgemäßen Verfahren vorgesehen sind.

Ein weiterer Gegenstand der Erfindung ist eine lotfreie Flußmittelzubereitung. Sie umfaßt einen für das lotfreie Aluminiumlöten effektiven Gehalt eines Flußmittels, welches 6 bis 50 Gew.-% K₂SiF₆ und 50 bis 94 Gew.-% Kaliumfluoraluminat enthält, sowie weitere übliche Hilfsstoffe, insbesondere Wasser und/oder organische Flüssigkeiten. Eine bevorzugte lotfreie Flußmittelzubereitung umfaßt 3 bis 70 Gew.-% des Flußmittels sowie Wasser und/oder organische Flüssigkeiten als Rest auf Hundert Gew.-% sowie gegebenenfalls weitere übliche Hilfsstoffe wie Bindemittel oder Dispergiermittel.

Die Verwendung von K₂SiF₆ und Kaliumfluoraluminat zur Herstellung eines Flußmittels oder einer Flußmittelzubereitung, welche zum lotfreien Löten von Aluminium oder Aluminiumlegierungen geeignet ist, ist neu und ebenfalls Gegenstand der Erfindung.

Die Erfindung gestattet das Löten von Aluminium ohne separates Zusetzen eines Lotes oder eines Metalles. Dies erleichert die technische Anwendung und senkt zudem die Kosten des Lotverfahrens.

Die folgenden Beispiele sollen die Erfindung weiter erläutern, ohne sie in ihrem Umfang einzuschränken.

### Beispiel 1: Herstellung eines erfindungsgemäßen Flußmittels

2,5 g K₂SiF₆ und 10 Nocolok^{R}, ein Kaliumfluoraluminat auf Basis von KAlF₄ und K₂AlF₅, Produkt der Solvay Fluor und Derivate GmbH, wurden in fein verteilter Form miteinander vermischt.

### Beispiel 2: Herstellung einer erfindungsgemäßen Flußmittelaufschlämmung

a) 5 g Wasser wurden mit 2,5 g K₂SiF₆ und 10 g Nocolok^{R} unter Bildung einer wässrigen Aufschlämmung mit ca. 43 Gew.-% Feststoffgehalt vermischt.
b) 5 g Wasser wurden mit 12,5 g des nach Beispiel 1 erhaltenen Flußmittels unter Bildung einer wäßrigen Aufschlämmung mit ca. 43 Gew.-% Feststoffgehalt versetzt.

### Beispiel 3: Verwendung einer K₂SiF₆ und Nocolok^{R} enthaltenden Aufschlämmung beim Löten

Allgemeines: Winkel der Maße 40 x 5 x 05 mm aus Aluminiumlegierung AA 3003 wurden auf Aluminiumplättchen der Maße 25 x 25 x 0,3 mm aus dem gleichen Material aufgelötet. Die Bauteile wurden in die flußmittelhaltige Aufschlämmung eingetaucht und dann mit einem Propangasbrenner aufgeheizt.

Die Aufschlämmung wurde durch Vermischen der angegebenen Mengen an Wasser, K₂SiF₆ und Nocolok^{R} hergestellt.

| Beispiel | Menge an H₂O [g] | Menge an K₂SiF₆ [g] | Menge an Nocolok^{R} [g] | Ergebnis |
|---|---|---|---|---|
| 3.1 | 5 | 2,5 | 10 | gelötet |
| 3.2 | 12 | 3,0 | 18 | gelötet |
| 3.3 | 180 | 7,0 | 31 | gelötet |
| 3.4 | 180 | 8,0 | 31 | gelötet |
| 3.5 | 180 | 9,0 | 31 | gelötet |
| 3.6 | 180 | 10 | 31 | gelötet |
| 3.7 | 180 | 12 | 31 | gelötet |

### Beispiel 4: Löten im Lötofen

Die Durchführung erfolgte analog Beispiel 3.5, jedoch wurden die Bauteile in einem auf ca. 600 °C erhitzten Lötofen eingebracht. Die Teilchen konnten verlötet dem Ofen entnommen werden.

## Patentansprüche (Patentansprüche für folgende(n) Vertragsstaat(en): AT, CH, LI, DK, ES, FI, GR, IE, LU, NL, PT, SE)

1. Lotfreies Flußmittel bestehend aus 6 bis 50 Gew.-% K₂SiF₆ und 50 bis 94 Gew.-% Kaliumfluoraluminat, gegebenenfalls in Form eines Kits, welcher die getrennt vorliegenden Einzelsubstanzen zur gemeinsamen Anwendung enthält.

2. Lötfreies Flußmittel nach Anspruch 1, **dadurch gekennzeichnet, daß** es als Kaliumfluoraluminat KAlF₄ und K₂AlF₅ und/oder K₂AlF₅ · H₂O enthält.

3. Lötfreies Flußmittel nach Anspruch 1 und 2, **dadurch gekennzeichnet, daß** das Flußmittel K₂SiF₆ in einer Menge von 7 bis 30 Gew.-% enthält.

4. Lotfreie Flußmittelzubereitung, umfassend einen für das lotfreie Aluminiumlöten effektiven Gehalt eines Flußmittels gemäß Anspruch 1, 2 oder 3 sowie weitere übliche Hilfsstoffe, insbesondere Wasser und/oder organische Flüssigkeiten.

5. Verfahren zum Aluminiumlöten unter Verwendung eines Kaliumfluoraluminat enthaltenden Flußmittels, **dadurch gekennzeichnet, daß** man ohne Zusatz eines Lotes arbeitet und ein Flußmittel gemäß Anspruch 1 bis 3 verwendet.

6. Verfahren zum Aluminiumlöten unter Verwendung einer Kaliumfluoraluminat enthaltenden Flußmittelzubereitung, **dadurch gekennzeichnet, daß** man ohne Zusatz eines Lotes arbeitet und eine Flußmittelzubereitung nach Anspruch 4 verwendet, welche das Flußmittel in Form einer Aufschlämmung oder Paste in Wasser, einer organischen Flüssigkeit oder einem Gemisch von Wasser und einer organischen Flüssigkeit enthält.

7. Verfahren nach Anspruch 5 und 6, **dadurch gekennzeichnet, daß** man das Aluminiumlöten bei einer Temperatur von 580 °C bis 605 °C durchführt.

8. Verwendung von K₂SiF₆ und Kaliumfluoraluminat zur Herstellung eines Flußmittels gemäß Anspruch 1 bis 3 oder zur Herstellung einer Flußmittelzubereitung gemäß Anspruch 4 zum lotfreien Löten von Aluminium.

## Patentansprüche (Patentansprüche für folgende(n) Vertragsstaat(en): BE, DE, FR, GB, IT)

1. Lotfreies Flußmittel bestehend aus 6 bis 50 Gew.-% K₂SiF₆ und 50 bis 94 Gew.-% Kaliumfluoraluminat, wobei als Kaliumfluoraluminat KAlF₄ und K₂AlF₅ und/oder K₂AlF₅·H₂O verwendet wird, gegebenenfalls in Form eines Kits, welcher die getrennt vorliegenden Einzelsubstanzen zur gemeinsamen Anwendung enthält.

2. Lotfreies Flußmittel nach Anspruch 1, **dadurch gekennzeichnet, daß** es 7 bis 30 Gew.-% K₂SiF₆ enthält.

3. Lotfreie Flußmittelzubereitung, umfassend einen für das lotfreie Aluminiumlöten effektiven Gehalt eines Flußmittels gemäß Anspruch 1 und 2 sowie weitere übliche Hilfsstoffe, insbesondere Wasser und/oder organische Flüssigkeiten.

4. Verfahren zum Aluminiumlöten unter Verwendung eines Kaliumfluoraluminat enthaltenden Flußmittels, **dadurch gekennzeichnet, daß** man ohne Zusatz eines Lotes arbeitet und ein Flußmittel gemäß Anspruch 1 und 2 verwendet.

5. Verfahren zum Aluminiumlöten unter Verwendung eines Kaliumfluoraluminat enthaltenden Flußmittels, **dadurch gekennzeichnet, daß** man ohne Zusatz eines Lotes arbeitet und eine Flußmittelzubereitung gemäß Anspruch 3, welche das Flußmittel in Form einer Aufschlämmung oder Paste in Wasser, einer organischen Flüssigkeit oder einem Gemisch von Wasser und einer organischen Flüssigkeit enthält, verwendet.

6. Verfahren nach Anspruch 4 und 5, **dadurch gekennzeichnet, daß** man das Aluminiumlöten bei einer Temperatur von 580 °C bis 605 °C durchführt.

7. Verwendung von K₂SiF₆ und Kaliumfluoraluminat zur Herstellung eines Flußmittels gemäß Anspruch 1 und 2 zum lotfreien Löten von Aluminium.

8. Verwendung von K₂SiF₆ und Kaliumfluoraluminat zur Herstellung einer zum lotfreien Löten von Aluminium brauchbaren Flußmittelzubereitung nach Anspruch 3.

## Claims (Claims for the following Contracting State(s): AT, CH, LI, DK, ES, FI, GR, IE, LU, NL, PT, SE)

1. A solder-less flux consisting of 6 to 50% by weight K₂SiF₆ and 50 to 94% by weight potassium fluoroaluminate, optionally in the form of a kit, which contains the individual substances existing separately from one another for joint use.

2. A solder-less flux according to Claim 1, **characterised in that** it contains KAlF₄ and K₂AlF₅ and/or K₂AlF₅.H₂O as potassium fluoroaluminate.

3. A solder-less flux according to Claims 1 and 2, **characterised in that** the flux contains K₂SiF₆ in a quantity of 7 to 30% by weight.

4. A solder-less flux preparation, comprising a content, effective for solder-free soldering of aluminium, of a flux according to Claims 1, 2 or 3 and also other conventional auxiliaries, in particular water and/or organic liquids.

5. A method for the soldering of aluminium using a flux containing potassium fluoroaluminate, **characterised in that** it is carried out without the addition of a solder and a flux according to Claims 1 to 3 is used.

6. A method for the soldering of aluminium using a flux preparation containing potassium fluoroaluminate, **characterised in that** it is carried out without the addition of a solder and a flux preparation according to Claim 4 is used which contains the flux in the form of a slurry or paste in water, an organic liquid or a mixture of water and an organic liquid.

7. A method according to Claims 5 and 6, **characterised in that** the soldering of aluminium is performed at a temperature of 580°C to 605°C.

8. The use of K₂SiF₆ and potassium fluoroaluminate for the preparation of a flux according to Claims 1 to 3 or for the preparation of a flux preparation according to Claim 4 for the solder-less soldering of aluminium.

## Claims (Claims for the following Contracting State(s): BE, DE, FR, GB, IT)

1. A solder-less flux consisting of 6 to 50% by weight K₂SiF₆ and 50 to 94% by weight potassium fluoroaluminate, wherein KAlF₄ and K₂AlF₅ and/or K₂AlF₅.H₂O is used as potassium fluoroaluminate, optionally in the form of a kit, which contains the individual substances existing separately from one another for joint use.

2. A solder-less flux according to Claim 1, **characterised in that** it contains 7 to 30% by weight K₂SiF₆.

3. A solder-less flux preparation, comprising a content, effective for solder-less soldering of aluminium, of a flux according to Claims 1 and 2 and also additional conventional auxiliaries, in particular water and/or organic liquids.

4. A method for the soldering of aluminium using a flux containing potassium fluoroaluminate, **characterised in that** it is carried out without the addition of a solder and a flux according to Claims 1 and 2 is used.

5. A method for the soldering of aluminium using a flux containing potassium fluoroaluminate, **characterised in that** it is carried out without the addition of a solder and a flux preparation according to Claim 3 is used which contains the flux in the form of a slurry or paste in water, an organic liquid or a mixture of water and an organic liquid.

6. A method according to Claims 4 and 5, **characterised in that** the soldering of aluminium is performed at a temperature of 580°C to 605°C.

7. The use of K₂SiF₆ and potassium fluoroaluminate for the preparation of a flux according to Claims 1 and 2 for the solder-less soldering of aluminium.

8. The use of K₂SiF₆ and potassium fluoroaluminate for the preparation of a flux preparation according to Claim 3 usable for the solder-less soldering of aluminium.

## Revendications (Revendications pour l'(les) Etat(s) contractant(s) suivant(s): AT, CH, LI, DK, ES, FI, GR, IE, LU, NL, PT, SE)

1. Flux sans métal d'apport, constitué de 6 à 50% en poids de K₂SiF₆ et de 50 à 94% en poids de fluoroaluminate de potassium, éventuellement sous forme d'un kit, qui contient les différentes substances, présentes séparément, en vue de leur utilisation conjointe.

2. Flux sans métal d'apport selon la revendication 1, **caractérisé en ce qu'**il contient, comme fluoroaluminate de potassium, du KAlF₄ et du K₂AlF₅ et/ou du K₂AlF₅.H₂O.

3. Flux sans métal d'apport selon la revendication 1 et 2, **caractérisé en ce que** le flux contient du K₂SiF₆ dans une proportion de 7 à 30% en poids.

4. Préparation de flux sans métal d'apport, renfermant un flux conforme à la revendication 1, 2 ou 3, en une teneur efficace pour le brasage d'aluminium sans métal d'apport, ainsi que des produits complémentaires usuels, notamment de l'eau et/ou des liquides organiques.

5. Procédé pour braser de l'aluminium moyennant l'utilisation d'un flux contenant du fluoroaluminate de potassium, **caractérisé en ce que** l'on opère sans addition d'un métal d'apport et on utilise un flux conforme à l'une des revendications 1 à 3.

6. Procédé pour braser de l'aluminium moyennant l'utilisation d'une préparation de flux contenant du fluoroaluminate de potassium, **caractérisé en ce que** l'on opère sans addition d'un métal d'apport et on utilise une préparation de flux selon la revendication 4, qui contient le flux sous forme d'une suspension ou d'une pâte dans de l'eau, un liquide organique ou un mélange d'eau et d'un liquide organique.

7. Procédé selon la revendication 5 et 6, **caractérisé en ce que** l'on exécute le brasage de l'aluminium à une température de 580°C à 605°C.

8. Utilisation de K₂SiF₆ et de fluoroaluminate de potassium pour produire un flux conforme à l'une des revendications 1 à 3 ou pour produire une préparation de flux conforme à la revendication 4, en vue du brasage d'aluminium sans métal d'apport.

## Revendications (Revendications pour l'(les) Etat(s) contractant(s) suivant(s): BE, DE, FR, GB, IT)

1. Flux sans métal d'apport, constitué de 6 à 50% en poids de K₂SiF₆ et de 50 à 94% en poids de fluoroaluminate de potassium, du KAlF₄ et du K₂AlF₅ et/ou du K₂AlF₅.H₂O étant alors utilisé comme fluoroaluminate de potassium, éventuellement sous forme d'un kit, qui contient les différentes substances, présentes séparément, en vue de leur utilisation conjointe.

2. Flux sans métal d'apport selon la revendication 1, **caractérisé en ce qu'**il contient de 7 à 30% en poids de K₂SiF₆.

3. Préparation de flux sans métal d'apport, renfermant un flux conforme à la revendication 1 et 2, en une teneur efficace pour le brasage d'aluminium sans métal d'apport, ainsi que des produits complémentaires usuels, notamment de l'eau et/ou des liquides organiques.

4. Procédé pour braser de l'aluminium moyennant l'utilisation d'un flux contenant du fluoroaluminate de potassium, **caractérisé en ce que** l'on opère sans addition d'un métal d'apport et on utilise un flux conforme à la revendication 1 et 2.

5. Procédé pour braser de l'aluminium moyennant l'utilisation d'un flux contenant du fluoroaluminate de potassium, **caractérisé en ce que** l'on opère sans addition d'un métal d'apport et on utilise une préparation de flux conforme à la revendication 3, qui contient le flux sous forme d'une suspension ou d'une pâte dans de l'eau, un liquide organique ou un mélange d'eau et d'un liquide organique.

6. Procédé selon la revendication 4 et 5, **caractérisé en ce que** l'on exécute le brasage de l'aluminium à une température de 580°C à 605°C.

7. Utilisation de K₂SiF₆ et de fluoroaluminate de potassium pour produire un flux conforme à la revendication 1 et 2, en vue du brasage d'aluminium sans métal d'apport.

8. Utilisation de K₂SiF₆ et de fluoroaluminate de potassium pour produire une préparation de flux selon la revendication 3, employable pour le brasage d'aluminium sans métal d'apport.
